# EUROPEAN PATENT SPECIFICATION

(11) **EP 1 928 164 B1**
(45) Date of publication and mention of the grant of the patent: **25.01.2017**
(21) Application number: 07254623.7
(22) Date of filing: 29.11.2007
(51) Int. Cl.: H04N 1/32

(54) **Facsimile machine**
Faksimilegerät
Machine fac-similé

(30) Priority: 30.11.2006 JP 2006325050
(43) Date of publication of application: 04.06.2008
(73) Proprietor: Brother Kogyo Kabushiki Kaisha, Nagoya-shi, Aichi-ken 467-8561 (JP)
(72) Inventor: Ohmiya, Takashi, Nagoya-shi Aichi-ken 467-8562 (JP)
(74) Representative: Smith, Samuel Leonard

(56) References cited:
- EP-A- 0 905 635
- EP-A- 1 187 454
- EP-A- 1 452 991
- EP-A2- 0 428 254
- JP-A- 2 065 439
- JP-A- 7 240 823
- JP-A- 59 174 071
- JP-A- H02 172 363
- JP-A- H03 262 230
- JP-A- 2001 084 188
- US-A- 5 802 325
- US-A1- 2004 190 053

## Description

### Cross Reference to Related Application

This application claims priority from Japanese Patent Application NO. 2006-325050, filed on November 30, 2006, the entire subject matter of which is incorporated herein by reference.

### Background

### Technical Field

Aspects of the present invention relate to a facsimile machine capable of transmitting data to a destination specified by a user.

### Related Art

Conventionally, a facsimile machine to transmit data to a destination machine, which is specified by a user, has been known. Further, a facsimile machine configured to transmit the data to a destination machine specified by a number, which is stored in a memory card, is known. An example of such a facsimile machine is disclosed in Japanese Patent Provisional Publication 2006-121573. In the facsimile machine 1001 disclosed in the above-referenced publication, a memory card 2005 storing directories 4001 is inserted into a slot, which is provided in the facsimile machine 1001. The directories 4001 include a directory 4003 having a directory name 4004, which is a facsimile number (i.e., a telephone number) indicating the destination facsimile machine. As the directory 4003 is extracted, a data file included in the directory 4003 is transmitted to the destination.

In the facsimile machine 1001, however, when the telephone number (i.e., the directory name 4004) is an erroneously registered unintended telephone number, the data file is transmitted to an incorrect destination.

JP-A-7240823 discloses facsimile equipment provided with a transmission flag output section outputting either of valid/invalid transmission flag, a reception flag output section outputting either of valid/invalid reception flag, and an ID register having an ID of its own terminal equipment and collating match/mismatch of a reception destination sent from a transmission destination and an ID of its own terminal equipment. When the transmission flag is valid and the reception destination ID sent from the sender side and the reception destination terminal equipment ID are matched, an original is sent regardless of a reception flag of the reception destination. When the reception flag is valid and the reception destination ID sent from the sender side and the reception destination terminal equipment ID are matched, an original is receives regardless of a transmission flag of the transmission destination.

### Summary

In view of the above, the present invention is advantageous in that a facsimile machine, which is capable of restricting erroneous transmission of data to an unintended destination, is provided.

According to an aspect of the invention there is provided, a facsimile machine as defined in appended claim 1.

According to an aspect of the invention there is provided a method as defined in appended claim 8.

According to the above configurations, the facsimile usable data can be transmitted to the intended external machine exclusively when the correct destination ID of the intended external machine is detected. Therefore, an erroneous transmission to an unintended external machine due to an erroneously registered destination ID can be avoided.

### Brief Description of the Accompanying Drawings

Fig. 1 is a perspective view of an MFD (multi-functional device) 1 according to a first embodiment of the present invention.
Fig. 2 is a block diagram to schematically illustrate an electrical configuration of the MFD 1 according to the embodiment of the present invention. Fig. 3 is a flowchart to illustrate a USB memory-based transmission process according to the embodiment of the present invention.
Fig. 4 is a flowchart to illustrate a retransmission process according to the embodiment of the present invention.
Fig. 5 is a flowchart to illustrate a scanner-based transmission process according to the embodiment of the present invention.
Fig. 6 is a flowchart to illustrate a scanner-based transmission process according to a second embodiment of the present invention.

### Detailed Description

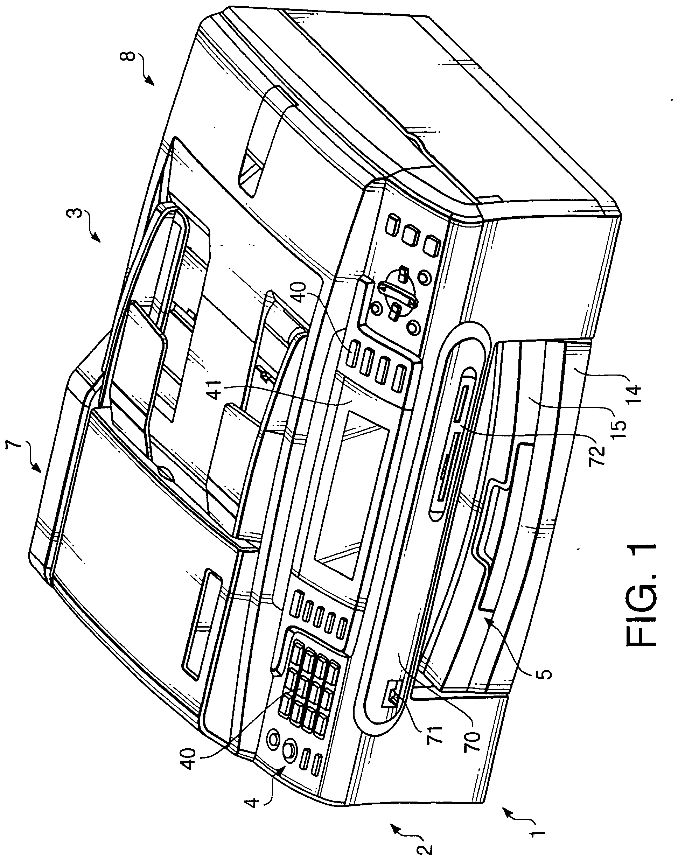

Hereinafter, embodiments according to aspects of the present invention will be described with reference to the accompanying drawings. Fig. 1 is a perspective view of the MFD 1 according to a first embodiment of the present invention. As shown in Fig. 1, the MFD 1 is provided with a printing unit 2 in a lower portion, a scanner unit 3 in an upper portion, and an operation panel 4 in front of the scanner unit 3 and serves to accomplish a printing function, a scanning function, a copying function, and a facsimile transmission/receiving function.

The MFD 1 is capable of being connected with an external device such as a USB memory, a digital camera, a personal computer (not shown) to receive data therefrom so that the received data can be output from the MFD 1 through the printing unit 2 as a printed image and on an LCD (liquid crystal display) 41, which is provided on the operation panel 4, as a displayed image. However, not all of the above-described functions are necessarily equipped to the MFD 1.

The scanner unit 3 includes a document reader (not shown) which is an FBS (flatbed scanner,) and a cover 8 with an ADF (auto document feeder) 7. The document reader 6 is provided with a glass platen (not shown) on a top portion of the document reader 6. Further, a reader unit (not shown) is provided below the document reader 6. Thus, a document is read by one of the FBS and the ADF.

The printing unit 2 in the present embodiment is an inkjet printing device, which ejects ink to form an image onto a recording medium (e.g., a sheet of paper.) However, the printing unit 2 may be an electrophotographic device, a thermal transfer printing device, or a laser printing device.

On a lower front side of the MFD 1 (i.e., a front side of the printing unit 2,) there is provided an opening 5, in which a sheet feed tray 14 and a sheet discharge tray 15 are arranged.

On an upper front side of the MFD 1, there is provided the operation panel 4, which is used for operating each of the units (e.g., the printing unit 2 and the scanning unit 3.) The operation panel 4 includes various operation keys 40 and the LCD 41. The operation keys 40 include mode selection keys, which are shown on the left-hand side of the LCD 41 in Fig. 1, and numerical keys, which are shown on the right-hand side of the LCD 41. When one of the mode selection keys is pressed, the MFD 1 is placed in a facsimile mode, in which facsimile transmission can be executed. In the facsimile mode, image data (facsimile data) is transmitted to a destination machine, which is identified by an identifying number being entered by the user through the numerical keys. In the present embodiment, the identifying number is a facsimile number (a telephone number) uniquely provided to the machine. On a top surface of the LCD 41, a touch-sensitive sensor, which can be touched by the user to input an instruction, is arranged.

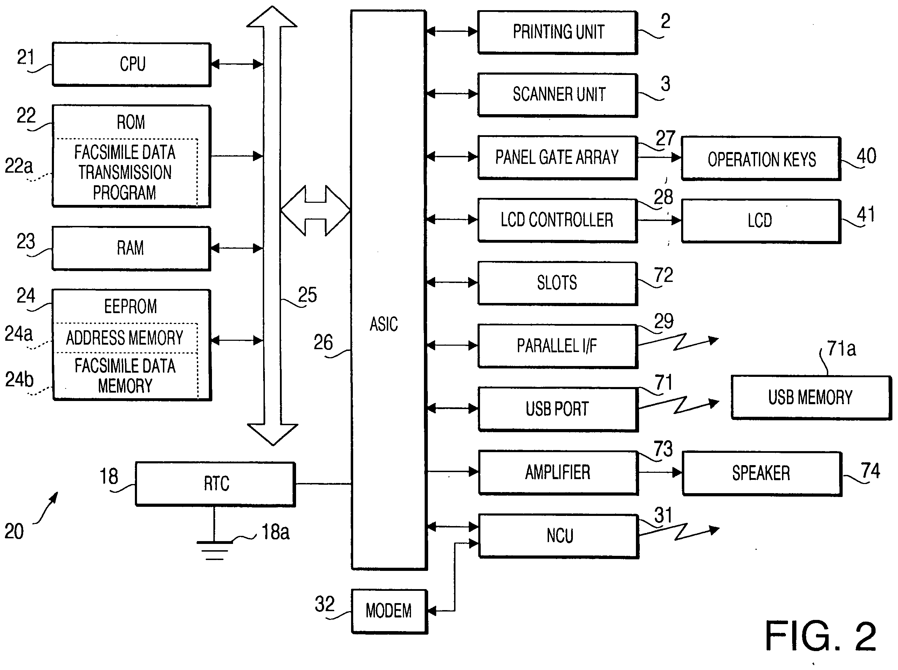

When the user inputs an instruction to the MFD 1 through the operation panel 4, a control unit 20 (see Fig. 2) controls operations of the MFD 1 according to the instruction. However, the control unit 20 can control operations of the MFD 1 according to instructions inputted through an external device (e.g., a computer being connected to the MFD 1) in addition to the instruction entered through the operation panel 4.

On the front side of the printer 2 above the opening 5, there is provided a connector panel 70, in which a USB port 71 is arranged on the left-hand side thereof. The USB port 71 provides connection between an external device and the MFD 1 by the universal serial bus. Further, the USB port 71 can provide connection between a USB storage device, such as a USB memory 71a (see Fig. 2.) The connector panel 70 is provided with slots 72, into which corresponding types of memory cards (not shown) can be inserted. Data such as image data stored in the memory cards is read by the control unit 20, and information concerning the image data is displayed on the LCD 41. Optionally or additionally, the image data is processed by the control unit 20 to be output (printed) on the recording sheet according to the user's selection.

Next, a configuration of the control unit 20 to control the operations of the MFD 1 will be described with reference to Fig. 2. Fig. 2 is a block diagram to schematically illustrate an electrical configuration of the MFD 1 according to the embodiment of the present invention.

The control unit 20 is a microcomputer having a CPU (central processing unit) 21 , a ROM (read only memory) 22, a RAM (random access memory) 23, and an EEPROM (electrically erasable and programmable ROM) 24, which are connected to an ASIC (application specific integrated circuit) 26 through a bus 25.

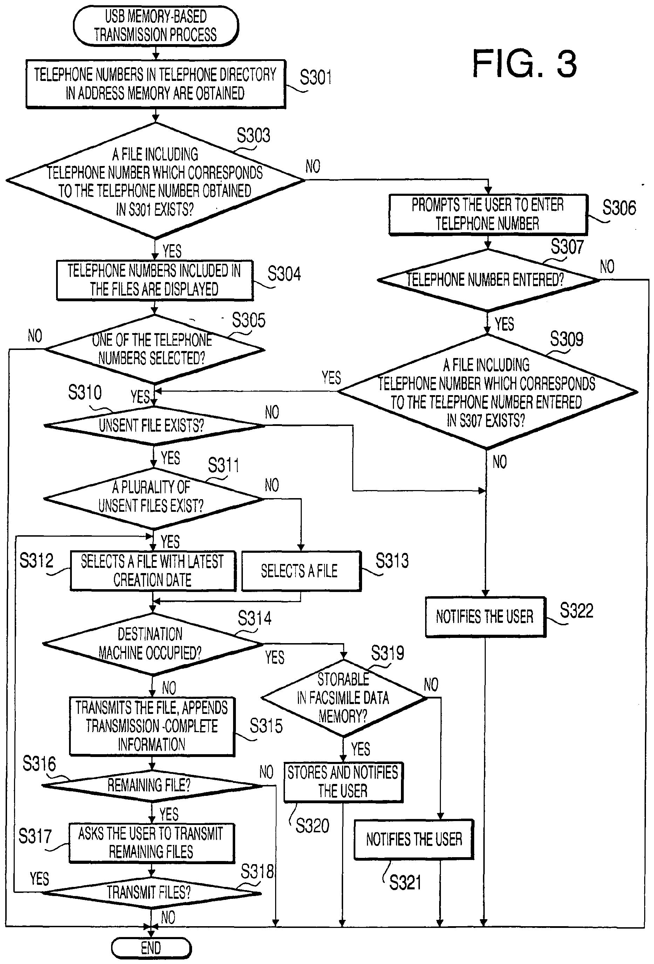

The CPU 21 controls the operations of the MFD 1 according to programs stored in the ROM 22. In the present embodiment, the ROM 22 includes a facsimile data transmission program 22a, which is a program to process the flows shown in Figs. 3 through 6. The RAM 23 is a storage area and a work area to temporally store various data to be used in the programs. The EEPROM 24 includes an address memory 24a and a facsimile data memory 24b. The address memory 24a has a telephone directory, in which telephone numbers of destination machines and names to identify the destination machines are stored to be associated with each other. The facsimile data memory 24b stores, for example, information which is to be transmitted to a destination machine but has not been transmitted because the destination machine is occupied by another call.

The ASIC 26 controls operations of the printing unit 2, the scanning unit 3, the operation panel 4, and the slots 72 according to instructions from the CPU 21. For example, operations of a motor to drive the printing unit 2, an inkjet head, a motor to drive the ADF 7 of the scanning unit 3, and a reader unit can be controlled by the ASIC 26. Detailed configurations of the printing unit 2, the scanning unit 3, and the slots 72 are known, therefore, description of those is omitted.

The ASIC 26 is connected with a panel gate array 27 to control the operation keys 40, an LCD controller 28 to control display on the LCD 41, a parallel I/F (interface) 29 through which data is exchanged with the external device, the USB port 71, a speaker 74 through an amplifier 73, an RTC (real-time clock) 18. The RTC 18 is connected with a battery 18a, which supplies electric power to the RTC 18 even when electricity to the MFD 1 is switched off.

Further, the ASIC 26 is connected with a network control unit 31. The network control unit 31 is connected with a modem 32. The network control unit 31 controls data communication with external network devices by receiving various signals including call signals transmitted from a switchboard and transmitting dial signals for calling according to the input through the operation keys 40. Further, the network control unit 31 transmits and receives analog voice signals when the telephone lines are closed. The modem 20 modulates and demodulates various data such as facsimile usable data (facsimile data) and e-mail data. Further, the modem 20 transmits and receives various processing signals for the transmission. The facsimile data is transmitted and received by the network control unit 31 and the modem 32 according to a predetermined facsimile transmission process.

Next, with reference to Figs. 3-5, a facsimile data transmission processes to transmit facsimile data by the MFD 1 will be described.

The processes shown in Figs. 3-5 are executed by the CPU 21 according to the facsimile data transmission program 22a. These processes are initiated when the user operates one of the mode selection keys to enter the MFD 1 in the facsimile mode and selects one of the USB memory-based transmission process, the retransmission process, and the scanner-based transmission process, which are indicated on the LCD 41.

Hereinafter, the USB memory-based transmission process shown in Fig. 3 will be described. Fig. 3 is a flowchart to illustrate a USB memory-based transmission process according to the first embodiment of the present invention. The USB memory-based transmission process is performed when a file data stored in the USB memory 71 a is transmitted to a designated facsimile device. In the present embodiment, the file to be transmitted is an electric file having been created by a user in a personal computer and stored in the USB memory 71a. In the USB memory 71a, a telephone number to indicate the destination machine and date information indicating the file creation date are associated with each other. It should be noted that prior to the USB memory-based transmission process, the USB memory 71a needs to be inserted into the USB port 71.

When the USB memory-based transmission process starts, in S301, the CPU 21 obtains telephone numbers registered in the telephone directory which is stored in the address memory 24a. In S303, it is judged as to whether there is a file including a telephone number which corresponds to the telephone number obtained in S301. If one or more files exists (S303: YES), in S304, the telephone numbers included in the files are displayed on the LCD 41, and the user is prompted to select one of the telephone numbers to call to make facsimile transmission.

In S305, it is judged as to whether the user has selected one of the telephone numbers. If the user has selected one of the telephone numbers (S305: YES,) the process proceeds to S310. In the above-described steps S301 through S305, the telephone numbers registered in the telephone directory and the telephone numbers stored in the USB memory 71a in association with the facsimile data files can be automatically matched. In S305, if none of the telephone numbers displayed on the LCD 41 is selected (S305: NO) (e.g., the user cancels the window displayed on the LCD 41 by pressing a cancel button), the process id terminated.

In S303, if it is judged that there is no file including a telephone number which corresponds to the telephone number obtained in S301 in the USB memory 71a (S303: NO,) in S306, the CPU 21 prompts the user to input a telephone number of a destination machine. For example, a message such as "Please enter a telephone number of a destination machine" is displayed, or a similar voice message can be output via the speaker 74.

In S307, if it is judged that the user has entered a telephone number through the numerical keys (S307: YES,) in S309, it is judged as to whether there is a file including a telephone number which corresponds to the telephone number entered in S307 in the USB memory 71a. If it is judged that the file exists (S309: YES,) the process proceeds to S310.

In S307, if no telephone number is entered by the user (S307: NO,) the process is terminated. In S309, if it is judged that no file including a telephone number which corresponds to the telephone number entered in S307 exists (S309: NO,) in S322, notification is given to the user to notify of absence of the file. Thereafter, the process is terminated.

In S310, the files including the telephone number selected in S305 or entered in S309 are examined to judge as to whether the files are objects of the transmission. More specifically, in the USB memory-based transmission process according to the present embodiment, a file having been transmitted is appended a piece of information (transmission-complete information) to indicate the completion of the transmission when the file is transmitted (see S315.) In the present embodiment, the file to be transmitted is limited Therefore, in S310, it is judged as to whether the files have been previously transmitted based on the transmission-complete information. It is noted, however, the transmission-complete information is not necessarily appended to the file having been transmitted. Instead, for example, information indicating the completion of transmission (e.g., a file name and a date of transmission) may be stored in the EEPROM 24 of the MFD 1 so that the completion of transmission can be judged based on the information in the EEPROM 24.

Thus, in S310, if a file as an object of the transmission (i.e., an unsent file) exists in the USB memory 71a (S310: YES,) in S311, it is judged as to whether two or more files as objects of the transmission exist in the USB memory 71a. In S310, if no unsent file exists in the USB memory 71a (S310: NO,) in S322, notification is given to the user to notify of absence of the file to transmit. Thereafter, the process is terminated.

In S311, if a plurality of unsent files exist in the USB memory 71a (S311: YES,) in S312, a file having a latest date of creation (i.e., a date when the file was created) is selected as a transmission object. The selection is made based on the date information which is stored in the USB memory 71a in association with the file. It is noted that the file having the latest date of creation is selected because, in many cases, a newly created file tends to be the file which the user wishes to transmit. Therefore, as the file with the latest date of creation is preferentially transmitted so that the desired file can be smoothly transmitted. However, a file to be preferentially transmitted can be arbitrarily selected by the user when a plurality of files as objects of the transmission exist in the USB memory 71a.

In S311, if solely one file as an object of the transmission exists (S311: NO,) in S313, the file is specified to be the transmission object.

In S314, a call to the destination machine, which is obtained in S305 or S307, is made, and it is judged as to whether a line to the destination machine is occupied. If the destination machine is not occupied (S314: NO,) in S315, the file as the transmission object is transmitted to the destination machine, and the transmission-complete information is appended to the file. Thus, it can prevent the file with the transmission-complete information from being redundantly transmitted to the destination machine when the same USB memory 71 a having a plurality of files is used in the USB memory-based transmission.

When the file transmission completed, in S316, it is judged as to whether there is a remaining file as an object of the transmission in the USB memory 71a. If there is a remaining file (S316: YES,) in S317, an inquiry as to whether the user wishes to transmit the remaining file is provided to the user. In this step, contents and/or name of the remaining file may be displayed on the LCD 41 so that the user can view to confirm the file for next transmission.

When an operation is given through the operation keys to instruct the remaining file to be transmitted (S318: YES,) the process returns to S312. If an operation to indicate the remaining file is not transmitted (S318: NO,) the process is terminated. In the steps following S312, it can be configured such that one or more files specified by the user among the remaining files are exclusively transmitted.

In S314, if it is judged that the destination machine is occupied for another call (S314: YES,) in S319, it is judged as to whether the file as an object of transmission can be stored in the facsimile data memory 24b. Storability of the file is determined by comparing free space in the facsimile data memory 24b and volume of the facsimile data. When the free space is greater than or equal to the volume of the facsimile data, it is judged to be storable. In S319, if it is judged to be storable (S319: YES,) the file is stored in the facsimile data memory 24b. Further, in S320, notification is given to notify the user that the destination machine is occupied and the file is stored in the facsimile data memory 24b. The process is terminated thereafter. Thus, the user can recognize that the file can be transmitted to the destination machine later on without the file stored in the USB memory 71a.

In S319, if it is judged that the file is not storable in the facsimile data memory 24b (S319: NO,) in S321, notification is given to notify the user that the destination machine is occupied and the file is not stored in the facsimile data memory 24b. The process is terminated thereafter. Thus, the user can recognize that the transmission of the file later on will require the USB memory 71 a.

According to the USB memory-based transmission process as described above, the telephone number stored in the USB memory 71 a in association with the file to be transmitted and the telephone number entered by the user through the numerical keys are verified. When the two telephone numbers do not coincide (S309: NO,) the file stored in the USB memory 71 a is not transmitted so that the file cannot be transmitted to an incorrect machine unintentionally.

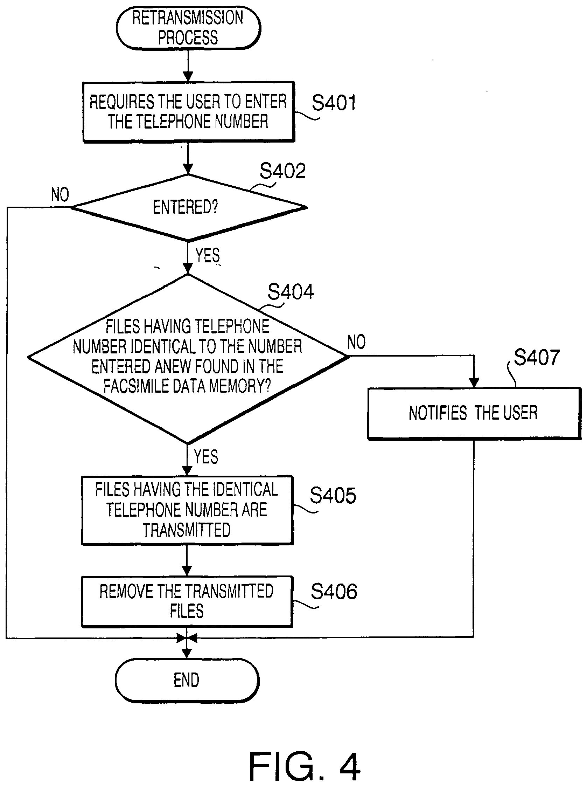

Fig. 4 is a flowchart to illustrate a retransmission process according to the embodiment of the present invention. In the retransmission process, the file store in the facsimile data memory 24b (S320 in Fig. 3) is transmitted to the destination machine.

When the process starts, in S401, the CPU 21 requires the user to enter anew the telephone number of the destination machine. In S402, it is judged as to whether a telephone number is entered. If a telephone number is entered (S402: YES,) in S404, the file having the telephone number identical to the telephone number entered in S402 is searched in the facsimile data memory 24b, and it is judged as to whether the file is found.

If one or more files are found (S404: YES,) in S405, the files stored in the facsimile data memory 24a in association with the telephone number entered in S402 are transmitted to the destination machine. Further, in S406, the files having been transmitted to the destination machine are removed from the facsimile data memory 24b. The process is terminated thereafter.

In S403, if no telephone number is entered (S402: NO,) the process is terminated. In S404, no file having the identical telephone number is found (S404: NO,) in S407, the CPU 21 notifies the user of the absence of the file having the telephone number which is identical to the telephone number being entered. The process is terminated thereafter.

It should be noted that, in the retransmission process described above, the files stored in the facsimile data memory 24b could be transmitted to the destination machine if the transmission process is configured such that the telephone numbers stored in the facsimile data memory 24b in association with the files are displayed on the LCD 41 to be specified by the user. That is, the user could specify the intended telephone number if the telephone numbers of the unsent files are displayed on the LCD 41 without entering the telephone number anew.

However, in such a configuration, the user still may erroneously select an unintended telephone number, and the files can be transmitted to an unintended machine. Therefore, in order to avoid such an unintended transmission, the user is required to enter the intended telephone number anew so that the files having the telephone number which is identical to the entered telephone number can be correctly transmitted to the intended destination machine in the retransmission process according to the present embodiment.

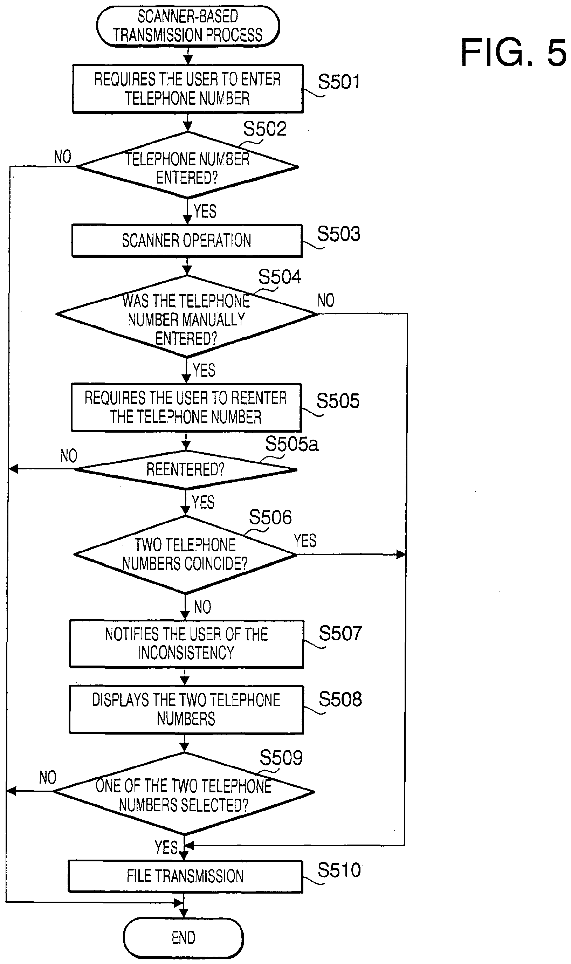

Next, a scanner-based transmission process according to the embodiment of the present invention will be described. Fig. 5 is a flowchart to illustrate the scanner-based transmission process according to the embodiment of the present invention. In the scanner-based transmission process, information (i.e., image data) generated by reading a document by the scanner unit 3 is transmitted to a destination machine.

When the process starts, in S501, the CPU 21 requires the user to enter an intended telephone number. The user may enter the telephone number through the numerical keys or may select one of telephone numbers displayed on the LCD 41 as the telephone numbers registered in the telephone directory of the address memory 24a are referred to and displayed on the LCD 41. In the latter case, the telephone numbers can be registered in association with names of the destination machines respectively so that the user can select the telephone number by the name of the destination machine.

Following S501, in S502, it is judged as to whether a telephone number has been entered. If it is judged to be entered (S502: YES,) in S503, the scanner unit 3 is operated to read information recorded on a document, which is placed on the document reader 6 so that the information obtained by scanning is processed to be facsimile data, which is to be transmitted to the destination machine. In S502, if no operation to enter a telephone number is given (S502: NO,) the process is terminated.

Following S503, in S504, it is judged as to whether the telephone number judged to be entered in S502 was entered manually through the numerical keys. If it is judged that the telephone number was entered manually through the numerical keys (S504: YES,) in S505, the CPU 21 requires the user to enter the intended telephone number once again. Thereafter, in S505a, it is judged as to whether a telephone number has been entered. If it is judged that a telephone number has been entered (S505a: YES,) in S506, it is judged as to whether the telephone number entered in response to S505 coincides with the telephone number entered in response to S501. In S505a, however, if it is judged that a telephone number was not entered (S505a: NO,) the process is terminated.

In S506, if it is judged that the two telephone numbers do not coincide (S506: NO,) in S507, notification to notify the user of the inconsistency is given. In S508, the two telephone numbers are displayed on the LCD 41. Further, a message to require the user to select one of the two displayed telephone number is displayed on the LCD 41.

Accordingly, in S509, it is judged as to whether the user has selected one of the two telephone numbers. If the user selected one (S509: YES,) in S510, the facsimile data generated based on the information, which was obtained in S503, is transmitted to the destination machine having the telephone number being selected. The process is terminated thereafter. In S509, if it is judged that neither of the telephone numbers was selected (S509: NO,) the process is terminated.

Meanwhile, in S504, if it is judged that the telephone number was not entered through the numerical keys (S504: NO,) the process proceeds to S510, in which the facsimile data obtained in S503 is transmitted to the destination machine having the entered telephone number. Similarly, in S506, if it is judged that the telephone number entered in response to S505 coincides with the telephone number entered in response to S501 (S506: YES,) the process proceeds to S510. Following S510, the process is terminated.

In the scanner-based transmission process as described above, the user is required to enter an intended telephone number in S501. In response, the user can manually enter the telephone number through the numerical keys. Alternatively, the user may, for example, refer to the telephone directory in the address memory 24a and designate one of the telephone numbers registered in the telephone directory. In the latter case, such a telephone number being specified is judged not to be entered manually through the numerical keys in S504 (S504: NO.)

In the scanner-based transmission process as described above, is the telephone number of the destination machine is manually entered through the numerical keys, the information scanned by the scanner unit 3 is transmitted to the destination machine specifically when the reentered telephone number coincides with the previously (in response to S501) entered telephone number. It is noted that, generally, incorrect entry of a telephone number tends to occur more frequently when a user manually inputs the telephone number than when the user refers to a telephone directory to specify an intended telephone number. Therefore, in the scanner-based transmission process, exclusively when the intended telephone number is manually entered, the user is required to reenter the identical telephone number to verify the intended telephone number. Thus, the facsimile data can be securely transmitted to the verified telephone number, and unintended transmission of the facsimile data can be avoided.

When the two telephone numbers do not coincide, the both telephone numbers are displayed on the LCD 41 for the user to view so that the user can select one of the two telephone numbers, and the selected telephone number is used as the correct intended telephone number. Thus, the facsimile data can be securely transmitted to the verified telephone number.

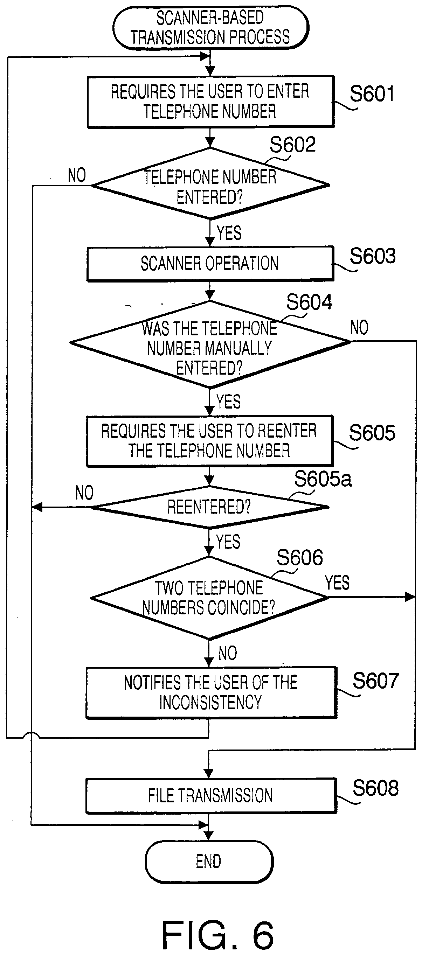

Fig. 6 is a flowchart to illustrate a scanner-based transmission process according to a second embodiment of the present invention. In the second scanner-based transmission process, information of the original document obtained by the scanner unit 3 is transmitted to a destination machine as facsimile data, similarly to the first scanner-based transmission process. In the second embodiment, configurations similar to the configurations of the MFD 1 of the first embodiment are referred to by the identical reference numerals, and description of those are omitted.

When the process starts, in S601, the CPU 21 requires the user to enter an intended telephone number. The user may manually enter through the numerical keys or by referring to the telephone directory. Following S601, in S602, it is judged as to whether a telephone number has been entered. If it is judged to be entered (S602: YES,) in S603, the scanner unit 3 is operated to read information recorded on a document, which is placed on the document reader 6 so that the information obtained by scanning is processed to be facsimile data, which is to be transmitted to the destination machine. In S502, if no operation to enter a telephone number is given (S602: NO,) the process is terminated.

Following S603, in S604, it is judged as to whether the telephone number judged to be entered in S602 was entered manually through the numerical keys. If it is judged that the telephone number was entered manually through the numerical keys (S604: YES,) in S605, the CPU 21 requires the user to enter the intended telephone number once again. Thereafter, in S605a, it is judged as to whether a telephone number has been entered. If it is judged that a telephone number has been entered (S605a: YES,) in S606, it is judged as to whether the telephone number entered in response to S605 coincides with the telephone number entered in response to S601. In S605a, however, if it is judged that a telephone number was not entered (S505a: NO,) the process is terminated.

In S606, if it is judged that the two telephone numbers do not coincide (S606: NO,) in S607, notification is given to the user. In the notification, the user is notified of the inconsistency between the two entered telephone numbers. In addition, the user is required to restart the process from the beginning (S601.) The process returns to S601.

Meanwhile, in S604, if it is judged that the telephone number was not entered through the numerical keys (S604: NO,) the process proceeds to S608, in which the facsimile data obtained in S603 is transmitted to the destination machine having the entered telephone number. Similarly, in S606, if it is judged that the telephone number entered in response to S605 coincides with the telephone number entered in response to S601 (S606: YES,) the process proceeds to S508. Following S508, the process is terminated.

Although examples of carrying out the invention have been described, those skilled in the art will appreciate that there are numerous variations and permutations of the facsimile transmission device that falls within the spirit and scope of the invention as set forth in the appended claims. It is to be understood that the subject matter defined in the appended claims is not necessarily limited to the specific features or act described above. Rather, the specific features and acts described above are disclosed as example forms of implementing the claims.

For example, in the USB memory-based transmission process described above, the memory medium to store the facsimile data with files and the telephone numbers is not limited to the USB memory, but may be any external memory medium as long as the files therein can be accessed from the MFD 1.

Further, in the USB memory-based transmission process, in S301, the telephone numbers registered in the address memory 24a in the telephone directory are referred to in order to judge as to whether there are telephone numbers which coincide with the telephone numbers being stored in the USB memory 71 a in association with the files having facsimile data. However, the user may specify a telephone number through the operation keys 40 based on the telephone directory, and the files stored in the USB memory 71 a having the telephone numbers which coincide with the specified telephone number can be transmitted to the destination machine. In this configuration, the files stored in the USB memory 71a may be associated with names of the destination machines rather than the telephone numbers.

Furthermore, in the USB memory-based transmission process, the user may specify a desired file to transmit through the operation keys 40 and may enter an intended telephone number through the operation key 40 or manually through the numerical keys. In such a configuration, it can be judged as to whether a telephone number stored in the USB memory 71a in association with the specified file and the telephone number being entered coincide with each other. Further, in such a configuration, when it is judged that the two telephone numbers do not coincide, it can be judged as to whether there is a telephone number which coincides with the telephone number being in association with the specified file in the telephone directory. If such a telephone number can be found in the telephone directory, the coinciding telephone number can be used for the facsimile transmission. In this configuration, even when the telephone number entered by the user is an unintended number, the facsimile data can be transmitted to the intended destination machine. Prior to the transmission, an inquiry to confirm the transmission to the telephone number (i.e., the telephone number being in association with the specified file and the coinciding telephone number found in the telephone directory) can be displayed on the LCD 41 so that the user can verify the intended destination of the transmission.

## Claims

1. A facsimile machine (1) having an input unit (4), through which a user inputs an instruction to the facsimile machine, and capable of transmitting facsimile usable data to an external machine, which is communicably connected to the facsimile machine (1) and identified by a unique destination ID, comprising:
a destination ID storing means (24a) storing a plurality of destination IDs;
a first obtaining means for obtaining (S502) a first destination ID of an external machine, according to one of: 1) the user's manual input to the input unit (4); and 2) the user's selection from among the plurality of destination IDs stored in the destination ID storing means (24a), as inputted by the user through the input unit (4);
a scanning unit (3) arranged to read (S503) an image formed on a recording medium and to generate facsimile usable data indicating the read image;
a second obtaining means for obtaining (S505), after the first obtaining means has obtained the first destination ID according to the user's manual input to the input unit (4), a second destination ID of the external machine according to the user's manual input to the input unit (4); and
a first judging means arranged to function when the first destination ID is inputted by the user through the input unit manually, the first judging means being for judging (S506) as to whether the first destination ID coincides with the second destination ID; and
a transmission controlling means for transmitting the facsimile usable data to an intended external machine which is identified by a correct destination ID detected based on a coincidence between the first destination ID and the second destination ID as judged by the first judging means.

2. The facsimile machine (1) according to claim 1, comprising:
a connection unit (70) which is arranged to provide connection for data exchange between the facsimile machine (1) and an external memory medium (71 a);
wherein a detecting means detects a correct destination ID of the intended external machine based on a coincidence between a third destination ID being inputted in the facsimile machine (1) through the input unit (4) and destination IDs being associated with the facsimile usable data which is stored in the external memory medium; and
wherein the transmission controlling means is arranged to transmit the facsimile usable data stored in the external memory medium (71 a) and being associated with the correct destination ID to the intended external machine identified by the correct destination ID when the correct destination ID of the intended external machine is detected by the detecting means.

3. The facsimile machine (1) according to claim 2,
wherein information indicating completion of the transmission is appended to the facsimile usable data when the transmission of the facsimile usable data is completed; and
wherein the transmission controlling means is arranged to avoid transmission of the facsimile usable data being stored in the external memory medium (71 a) and associated with the correct destination ID to the intended external machine identified by the correct destination ID when the facsimile data is appended the information indicating completion of the transmission.

4. The facsimile machine (1) according to claim 2 or claim 3,
wherein the facsimile usable data is stored in the external memory medium (71 a) in association with date information, which indicates a date of creation of the facsimile usable data;
wherein the transmission controlling means is arranged preferentially to transmit a piece of facsimile usable data being associated with latest date information, which indicates a latest date of creation, when a plurality of pieces of facsimile usable data are stored in the external memory medium (71a).

5. The facsimile machine (1) according to any of claims 2 through 4, comprising:
a second judging means, arranged to judge as to whether the intended external machine is capable of receiving the facsimile usable data transmitted by the transmission controlling means;
an unsent data storing means arranged to store the facsimile usable data being associated with the correct destination ID; and
a third obtaining means (24b) arranged to obtain a fourth destination ID of an external machine, to which the facsimile usable data stored in the unsent data storing means (24b) is to be transmitted,
wherein the transmission controlling means is arranged to store the facsimile usable data being associated with the correct destination ID in the unsent data storing means (24b) when the first judging means judges that the intended external machine is incapable of receiving the transmitted facsimile usable data; and
wherein transmission controlling means is arranged to transmit the facsimile usable data stored in the unsent data storing means (24b) to the intended external machine when the correct destination ID associated with the facsimile usable data being stored in the unsent data storing means (24b) coincides with the fourth destination ID obtained by the second obtaining means.

6. The facsimile machine (1) according to claim 1, wherein:
the second obtaining means is inactivated when the first destination ID is obtained from the destination ID storing means according to the user's selection among the plurality of destination IDs;
the first judging means is inactivated when the first destination ID is obtained from the destination ID storing means (24a) according to the user's selection among the plurality of destination IDs; and
wherein the transmission controlling means transmits the facsimile usable data to an intended external machine which is identified by the first destination ID when the first destination ID is obtained from the destination ID storing means according to the user's selection among the plurality of destination IDs.

7. The facsimile machine (1) according to claim 1, comprising:
a destination ID selecting means, in which the first destination ID and the second destination ID are displayed to the user so that the user can select one of the first destination ID and the second destination ID as the correct destination ID when the first destination ID is inconsistent with the second destination ID;
wherein the transmission controlling means is arranged to transmit the facsimile usable data generated by the scanning unit (3) to the intended external machine identified by the correct destination ID selected by the destination ID selecting means.

8. A method to transmit facsimile usable data to an external machine by a facsimile machine (1) having an input unit, through which a user inputs an instruction to the facsimile machine (1), having a destination ID storing means (24a) storing a plurality of destination IDs, and capable of transmitting facsimile usable data to an external machine, which is communicably connected to the facsimile machine and identified by a unique destination ID, the facsimile machine (1) further comprising a scanning unit (3) to read an image formed on a recording medium and generates facsimile usable data indicating the read image, the method comprising steps of:
obtaining (S502) a first destination ID of an external machine, according to one of: 1) the user's manual input to the input unit (4); and 2) the user's selection from among the plurality of destination IDs stored in the destination ID storing means (24a), as inputted by the user through the input unit (4);
obtaining (S505), after obtaining the first destination ID according to the user's manual input to the input unit (4), a second destination ID of the external machine according to the user's manual input to the input unit (4);
judging (S506), when the first destination ID is inputted by the user through the input unit manually and not when the first destination ID is obtained from the destination ID storing means (24a) according to the user's selection among the plurality of destination IDs, as to whether the first destination ID coincides with the second destination ID; and
transmitting the facsimile usable data to the intended external machine which is identified by a correct destination ID detected based on a coincidence between the first destination ID and the second destination ID as judged in the step of judging.

9. The method according to claim 8 to transmit the facsimile usable data by the facsimile machine (1), which comprises a connection unit to provide connection for data exchange between the facsimile machine (1) and an external memory medium (71 a),
wherein the correct destination ID of the intended external machine is detected based on the coincidence between a third destination ID being inputted in the facsimile machine through the input unit (4) and destination IDs being associated with the facsimile usable data which is stored in the external memory medium (71 a); and
wherein the facsimile usable data stored in the external memory medium (71 a) and being associated with the correct destination ID is transmitted to the intended external machine identified by the correct destination ID when the correct destination ID of the intended external machine is detected.

## Patentansprüche

1. Faxgerät (1) mit einer Eingabeeinheit (4), durch die ein Benutzer einen Befehl für das Faxgerät eingibt, und die Faxnutzdaten zu einer externen Maschine senden kann, die kommunikativ mit dem Faxgerät (1) verbunden werden kann und durch eine eindeutige Bestimmungs-ID identifiziert ist, mit:
einer Bestimmungs-ID-Speichereinrichtung (24a), die viele Bestimmungs-IDs speichert;
einer ersten Erhaltungseinrichtung zum Erhalten (S502) einer ersten Bestimmungs-ID einer externen Maschine entweder gemäß: 1) der manuellen Eingabe des Benutzers in die Eingabeeinheit (4); oder 2) der Auswahl des Benutzers aus den vielen Bestimmungs-IDs, die in der Bestimmungs-ID-Speichereinrichtung (24a) gespeichert sind, wenn sie durch den Benutzer durch die Eingabeeinheit (4) eingegeben wird;
einer Scaneinheit (3), die dazu eingerichtet ist, ein Bild zu lesen (S503), das an einem Aufzeichnungsmedium erzeugt ist, und Faxnutzdaten zu erzeugen, die das gelesene Bild angeben;
einer zweiten Erhaltungseinrichtung, um eine zweite Bestimmungs-ID der externen Maschine gemäß der manuellen Eingabe des Benutzers in die Eingabeeinheit (4) zu erhalten (S505), nachdem die erste Erhaltungseinrichtung die erste Bestimmungs-ID gemäß der manuellen Eingabe des Benutzers in die Eingabeeinheit (4) erhalten hat; und
einer ersten Bestimmungseinrichtung, die dazu eingerichtet ist, dann zu funktionieren, wenn die erste Bestimmungs-ID durch den Benutzer manuell in die Eingabeeinheit eingegeben wird, wobei die erste Bestimmungseinrichtung dazu dient, zu bestimmen, ob die erste Bestimmungs-ID mit der zweiten Bestimmungs-ID übereinstimmt (S506); und
einer Sendesteuereinrichtung zum Senden der Faxnutzdaten zu einer bestimmten externen Maschine, die durch eine korrekte Bestimmungs-ID identifiziert ist, was auf der Grundlage einer Übereinstimmung zwischen der ersten Bestimmungs-ID und der zweiten Bestimmungs-ID erfasst wird, wie sie durch die erste Bestimmungseinrichtung bestimmt wird.

2. Faxgerät (1) gemäß Anspruch 1, mit:
einer Verbindungseinheit (70), die dazu eingerichtet ist, eine Verbindung zum Datenaustausch zwischen dem Faxgerät (1) und einem externen Speichermedium (71a) bereitzustellen;
wobei eine Erfassungseinrichtung eine korrekte Bestimmungs-ID der bestimmten externen Maschine auf der Grundlage einer Übereinstimmung zwischen einer dritten Bestimmungs-ID, die in das Faxgerät (1) durch die Eingabeeinheit (4) eingegeben wird, und Bestimmungs-IDs erfasst, die mit den Faxnutzdaten verknüpft sind, die in dem externen Speichermedium gespeichert sind; und
wobei die Sendesteuereinrichtung dazu eingerichtet ist, die Faxnutzdaten, die in dem externen Speichermedium (71a) gespeichert und mit der korrekten Bestimmungs-ID verknüpft sind, zu der bestimmten externen Maschine zu senden, die durch die korrekte Bestimmungs-ID identifiziert ist, wenn die korrekte Bestimmungs-ID der bestimmten externen Maschine durch die Erfassungseinrichtung erfasst wird.

3. Faxgerät (1) gemäß Anspruch 2,
wobei Informationen, die eine Beendigung des Sendens angeben, an die Faxnutzdaten angehängt werden, wenn das Senden der Faxnutzdaten beendet ist; und
wobei die Sendesteuereinrichtung dazu eingerichtet ist, ein Senden der Faxnutzdaten, die in dem externen Speichermedium (71a) gespeichert und mit der korrekten Bestimmungs-ID verknüpft sind, zu der bestimmten externen Maschine zu vermeiden, die durch die korrekte Bestimmungs-ID identifiziert ist, wenn die Informationen, die die Beendigung des Sendens angeben, an den Faxdaten angehängt sind.

4. Faxgerät (1) gemäß Anspruch 2 oder 3,
wobei die Faxnutzdaten in dem externen Speichermedium (71a) verknüpft mit Dateninformationen gespeichert sind, die ein Datum einer Erzeugung der Faxnutzdaten angeben;
wobei die Sendesteuereinrichtung dazu eingerichtet ist, vorzugsweise ein Faxnutzdatenstück zu senden, das mit den letzten Dateninformationen verknüpft ist, die ein letztes Erzeugungsdatum angeben, wenn viele Faxnutzdaten in dem externen Speichermedium (71a) gespeichert sind.

5. Faxgerät (1) gemäß einem der Ansprüche 2 bis 4, mit:
einer zweiten Bestimmungseinrichtung, die dazu eingerichtet ist, zu bestimmen, ob die bestimmte externe Maschine die Faxnutzdaten aufnehmen kann, die durch die Sendesteuereinrichtung gesendet sind;
einer Speichereinrichtung für nicht gesendete Daten, die dazu eingerichtet ist, die Faxnutzdaten zu speichern, die mit der korrekten Bestimmungs-ID verknüpft sind; und
einer dritten Erhaltungseinrichtung (24b), die dazu eingerichtet ist, eine vierte Bestimmungs-ID einer externen Maschine zu erhalten, zu der die Faxnutzdaten nicht gesendet sind, die in der Speichereinrichtung (24b) für nicht gesendete Daten gespeichert sind,
wobei die Sendesteuereinrichtung dazu eingerichtet ist, die Faxnutzdaten, die mit der korrekten Bestimmungs-ID verknüpft sind, in der Speichereinrichtung (24b) für nicht gesendete Daten zu speichern, wenn die erste Bestimmungseinrichtung bestimmt, dass die bestimmte externe Maschine die gesendeten Faxnutzdaten nicht aufnehmen kann; und
wobei die Sendesteuereinrichtung dazu eingerichtet ist, die in der Speichereinrichtung (24b) für nicht gesendete Daten gespeicherten Faxnutzdaten zu der bestimmten externen Maschine zu senden, wenn die korrekte Bestimmungs-ID, die mit den in der Speichereinrichtung (24b) für nicht gesendete Daten gespeicherten Faxnutzdaten verknüpft sind, mit der vierten Bestimmungs-ID übereinstimmt, die durch die zweite Erhaltungseinrichtung erhalten ist.

6. Faxgerät (1) gemäß Anspruch 1, wobei:
die zweite Erhaltungseinrichtung deaktiviert wird, wenn die erste Bestimmungs-ID von der Bestimmungs-ID-Speichereinrichtung gemäß der Auswahl des Benutzers aus den vielen Bestimmungs-IDs erhalten wird;
die erste Bestimmungseinrichtung deaktiviert wird, wenn die erste Bestimmungs-ID von der Bestimmungs-ID-Speichereinrichtung (24a) gemäß der Auswahl des Benutzers aus den vielen Bestimmungs-IDs erhalten wird; und
wobei die Sendesteuereinrichtung die Faxnutzdaten zu einer bestimmten externen Maschine sendet, die durch die erste Bestimmungs-ID identifiziert ist, wenn die erste Bestimmungs-ID von der Bestimmungs-ID-Speichereinrichtung gemäß der Auswahl des Benutzers aus den vielen Bestimmungs-IDs erhalten wird.

7. Faxgerät (1) gemäß Anspruch 1, mit:
einer Bestimmungs-ID-Auswahleinrichtung, in der die erste Bestimmungs-ID und die zweite Bestimmungs-ID dem Benutzer angezeigt werden, so dass der Benutzer entweder die erste Bestimmungs-ID oder die zweite Bestimmungs-ID als die korrekte Bestimmungs-ID auswählen kann, wenn die erste Bestimmungs-ID mit der zweiten Bestimmungs-ID inkonsistent ist;
wobei die Sendesteuereinrichtung dazu eingerichtet ist, die durch die Scaneinheit (3) erzeugten Faxnutzdaten zu der bestimmten externen Maschine zu senden, die durch die korrekte Bestimmungs-ID identifiziert ist, die durch die Bestimmungs-ID-Auswahleinrichtung ausgewählt ist.

8. Verfahren zum Senden von Faxnutzdaten zu einer externen Maschine durch ein Faxgerät (1), das eine Eingabeeinheit hat, durch die ein Benutzer einen Befehl zu dem Faxgerät (1) eingeben kann, das eine Bestimmungs-ID-Speichereinrichtung (24a) hat, das viele Bestimmungs-IDs speichert, und das Faxnutzdaten zu einer externen Maschine senden kann, die kommunikativ mit dem Faxgerät verbunden ist und durch eine eindeutige Bestimmungs-ID identifiziert ist, wobei das Faxgerät (1) das Weiteren eine Scaneinheit (3) zum Lesen eines an einem Aufzeichnungsmedium erzeugten Bilds aufweist und Faxnutzdaten erzeugt, die das gelesene Bild angeben, wobei das Verfahren die folgenden Schritte aufweist:
Erhalten (S502) einer ersten Bestimmungs-ID einer externen Maschine entweder gemäß: 1) der manuellen Eingabe des Benutzers in die Eingabeeinheit (4); oder 2) der Auswahl des Benutzers aus den vielen Bestimmungs-IDs, die in der Bestimmungs-ID-Speichereinrichtung (24a) gespeichert sind, wenn sie durch den Benutzer durch die Eingabeeinheit (4) eingegeben wird;
Erhalten (S505) einer zweiten Bestimmungs-ID der externen Maschine gemäß der manuellen Eingabe des Benutzers in die Eingabeeinheit (4) nach dem Erhalten der ersten Bestimmungs-ID gemäß der manuellen Eingabe des Benutzers in die Eingabeeinheit (4);
Bestimmen (S506), ob die erste Bestimmungs-ID mit der zweiten Bestimmungs-ID übereinstimmt, wenn die erste Bestimmungs-ID durch den Benutzer durch die Eingabeeinheit manuell eingegeben wird, und nicht wenn die erste Bestimmungs-ID von der Bestimmungs-ID-Speichereinrichtung (24a) gemäß der Auswahl des Benutzers aus den vielen Bestimmungs-IDs erhalten wird; und
Senden der Faxnutzdaten zu der bestimmten externen Maschine, die durch eine korrekte Bestimmungs-ID identifiziert ist, die auf der Grundlage einer Übereinstimmung zwischen der ersten Bestimmungs-ID und der zweiten Bestimmungs-ID erfasst wird, wie sie bei dem Bestimmungsschritt bestimmt wird.

9. Verfahren gemäß Anspruch 8 zum Senden der Faxnutzdaten durch das Faxgerät (1), das eine Verbindungseinheit aufweist, um eine Verbindung für einen Datenaustausch zwischen dem Faxgerät (1) und einem externen Speichermedium (71a) bereitzustellen,
wobei die korrekte Bestimmungs-ID der bestimmten externen Maschine auf der Grundlage der Übereinstimmung zwischen einer dritten Bestimmungs-ID, die in das Faxgerät durch die Eingabeeinheit (4) eingegeben wird, und Bestimmungs-IDs erfasst wird, die mit den Faxnutzdaten verknüpft sind, die in dem externen Speichermedium (71a) gespeichert sind; und
wobei die Faxnutzdaten, die in dem externen Speichermedium (71a) gespeichert sind und mit der korrekten Bestimmungs-ID verknüpft sind, zu der bestimmten externen Maschine gesendet werden, die durch die korrekte Bestimmungs-ID identifiziert ist, wenn die korrekte Bestimmungs-ID der bestimmten externen Maschine erfasst wird.

## Revendications

1. Télécopieur (1) comportant une unité d'entrée (4), par l'intermédiaire de laquelle un utilisateur entre une instruction pour le télécopieur, et capable de transmettre des données utilisables par un télécopieur à une machine externe, qui est connectée de manière communicante au télécopieur (1) et identifiée par un identifiant de destination unique, comprenant :
des moyens de mémorisation d'identifiant de destination (24a) mémorisant une pluralité d'identifiants de destination ;
des premiers moyens d'obtention pour obtenir (S502) un premier identifiant de destination d'une machine externe, conformément à l'une : 1) d'une entrée manuelle, par l'utilisateur, dans l'unité d'entrée (4) ; et (2) d'une sélection, par l'utilisateur, parmi la pluralité d'identifiants de destination mémorisés dans les moyens de mémorisation d'identifiant de destination (24a), tels qu'entrés par l'utilisateur par l'intermédiaire de l'unité d'entrée (4) ;
une unité de balayage (3) agencée pour lire (S503) une image formée sur un support d'enregistrement et pour générer des données utilisables par un télécopieur indiquant l'image lue ;
des deuxièmes moyens d'obtention pour obtenir (S505), après que les premiers moyens d'obtention ont obtenu le premier identifiant de destination conformément à l'entrée manuelle par l'utilisateur dans l'unité d'entrée (4), un deuxième identifiant de destination de la machine externe conformément à l'entrée manuelle par l'utilisateur dans l'unité d'entrée (4) ; et
des premiers moyens de jugement agencés pour fonctionner lorsque le premier identifiant de destination est entré manuellement par l'utilisateur par l'intermédiaire de l'unité d'entrée, les premiers moyens de jugement étant destinés à juger (S506) si le premier identifiant de destination coïncide avec le deuxième identifiant de destination ; et
des moyens de commande de transmission pour transmettre les données utilisables par un télécopieur à une machine externe voulue qui est identifiée par un identifiant de destination correct détecté sur la base d'une coïncidence entre le premier identifiant de destination et le deuxième identifiant de destination telle que jugée par les premiers moyens de jugement.

2. Télécopieur (1) selon la revendication 1, comprenant :
une unité de connexion (70) qui est agencée pour réaliser une connexion pour un échange de données entre le télécopieur (1) et un support de mémorisation externe (71a) ;
dans lequel des moyens de détection détectent un identifiant de destination correct de la machine externe voulue sur la base d'une coïncidence entre un troisième identifiant de destination entré dans le télécopieur (1) par l'intermédiaire de l'unité d'entrée (4) et des identifiants de destination associés aux données utilisables par un télécopieur qui sont mémorisés dans le support de mémorisation externe ; et
dans lequel les moyens de commande de transmission sont agencés pour transmettre les données utilisables par un télécopieur mémorisées dans le support de mémorisation externe (71a) et associées à l'identifiant de destination correct à la machine externe voulue identifiée par l'identifiant de destination correct lorsque l'identifiant de destination correct de la machine externe voulue est détecté par les moyens de détection.

3. Télécopieur (1) selon la revendication 2,
dans lequel des informations indiquant l'achèvement de la transmission sont ajoutées aux données utilisables par un télécopieur lorsque la transmission des données utilisables par un télécopieur est achevée ; et
dans lequel les moyens de commande de transmission sont agencés pour empêcher la transmission des données utilisables par un télécopieur mémorisées dans le support de mémorisation externe (71a) et associées à l'identifiant de destination correct pour la machine externe voulue identifiée par l'identifiant de destination correct lorsque les données de télécopieur sont complétées par les informations indiquant l'achèvement de la transmission.

4. Télécopieur (1) selon la revendication 2 ou la revendication 3,
dans lequel les données utilisables par un télécopieur sont mémorisées dans le support de mémorisation externe (71a) en association avec des informations de date, qui indiquent une date de création des données utilisables par un télécopieur ;
dans lequel les moyens de commande de transmission sont agencés de préférence pour transmettre un élément de données utilisables par un télécopieur associé aux informations de date la plus récente, qui indiquent une date de création la plus récente, lorsqu'une pluralité d'éléments de données utilisables par un télécopieur sont mémorisés dans le support de mémorisation externe (71a).

5. Télécopieur (1) selon l'une quelconque des revendications 2 à 4, comprenant :
des deuxièmes moyens de jugement, agencés pour juger si la machine externe voulue est capable de recevoir les données utilisables par un télécopieur transmises par les moyens de commande de transmission ;
des moyens de mémorisation de données non envoyées agencés pour mémoriser les données utilisables par un télécopieur associées à l'identifiant de destination correct ; et
des troisièmes moyens d'obtention (24b) agencés pour obtenir un quatrième identifiant de destination d'une machine externe, à laquelle les données utilisables par un télécopieur mémorisées dans les moyens de mémorisation de données non envoyées (24b) doivent être transmises,
dans lequel les moyens de commande de transmission sont agencés pour mémoriser les données utilisables par un télécopieur associées à l'identifiant de destination correct dans les moyens de mémorisation de données non envoyées (24b) lorsque les premiers moyens de jugement jugent que la machine externe voulue est incapable de recevoir les données utilisables par un télécopieur transmises ; et
dans lequel des moyens de commande de transmission sont agencés pour transmettre les données utilisables par un télécopieur mémorisées dans les moyens de mémorisation de données non envoyées (24b) à la machine externe voulue lorsque l'identifiant de destination correct associé aux données utilisables par un télécopieur mémorisées dans les moyens de mémorisation de données non envoyées (24b) coïncide avec le quatrième identifiant de destination obtenu par les deuxièmes moyens d'obtention.

6. Télécopieur (1) selon la revendication 1, dans lequel :
les deuxièmes moyens d'obtention sont désactivés lorsque le premier identifiant de destination est obtenu à partir des moyens de mémorisation d'identifiant de destination conformément à une sélection par l'utilisateur parmi la pluralité d'identifiants de destination ;
les premiers moyens de jugement sont désactivés lorsque le premier identifiant de destination est obtenu à partir des moyens de mémorisation d'identifiant de destination (24a) conformément à une sélection par l'utilisateur parmi la pluralité d'identifiants de destination ; et
dans lequel les moyens de commande de transmission transmettent les données utilisables par un télécopieur à une machine externe voulue qui est identifiée par le premier identifiant de destination lorsque le premier identifiant de destination est obtenu à partir des moyens de mémorisation d'identifiant de destination conformément à une sélection par l'utilisateur parmi la pluralité d'identifiants de destination.

7. Télécopieur (1) selon la revendication 1, comprenant :
des moyens de sélection d'identifiant de destination, dans lesquels le premier identifiant de destination et le deuxième identifiant de destination sont affichés à l'utilisateur de sorte que l'utilisateur puisse sélectionner l'un du premier identifiant de destination et du deuxième identifiant de destination en tant qu'identifiant de destination correct lorsque le premier identifiant de destination ne coïncide avec le deuxième identifiant de destination ;
dans lequel les moyens de commande de transmission sont agencés pour transmettre les données utilisables par un télécopieur générées par l'unité de balayage (3) à la machine externe voulue identifiée par l'identifiant de destination correct sélectionné par les moyens de sélection d'identifiant de destination.

8. Procédé pour transmettre des données utilisables par un télécopieur à une machine externe par un télécopieur (1) comportant une unité d'entrée, par l'intermédiaire de laquelle un utilisateur entre une instruction pour le télécopieur (1), comportant des moyens de mémorisation d'identifiant de destination (24a) mémorisant une pluralité d'identifiants de destination, et capable de transmettre des données utilisables par un télécopieur à une machine externe, qui est connectée de manière communicante au télécopieur et identifiée par un identifiant de destination unique, le télécopieur (1) comprenant en outre une unité de balayage (3) pour lire une image formée sur un support d'enregistrement et générer des données utilisables par un télécopieur indiquant l'image lue, le procédé comprenant les étapes :
d'obtention (S502) d'un premier identifiant de destination d'une machine externe, conformément à l'une : 1) d'une entrée manuelle, par l'utilisateur, dans l'unité d'entrée (4) ; et 2) d'une sélection, par l'utilisateur, parmi la pluralité d'identifiants de destination mémorisés dans les moyens de mémorisation d'identifiant de destination (24a), tels qu'entrés par l'utilisateur par l'intermédiaire de l'unité d'entrée (4) ;
d'obtention (S505), après l'obtention du premier identifiant de destination conformément à l'entrée manuelle par l'utilisateur dans l'unité d'entrée (4), d'un deuxième identifiant de destination de la machine externe conformément à l'entrée manuelle par l'utilisateur dans l'unité d'entrée (4) ;
de jugement (S506), lorsque le premier identifiant de destination est entré manuellement par l'utilisateur par l'intermédiaire de l'unité d'entrée et non lorsque le premier identifiant de destination est obtenu à partir des moyens de mémorisation d'identifiant de destination (24a) conformément à la sélection par l'utilisateur parmi la pluralité d'identifiants de destination, si le premier identifiant de destination coïncide avec le deuxième identifiant de destination ; et
de transmission des données utilisables par un télécopieur à la machine externe voulue qui est identifiée par un identifiant de destination correct détecté sur la base d'une coïncidence entre le premier identifiant de destination et le deuxième identifiant de destination telle que jugée à l'étape de jugement.

9. Procédé selon la revendication 8 pour transmettre les données utilisables par un télécopieur par le télécopieur (1), qui comprend une unité de connexion pour réaliser une connexion pour un échange de données entre le télécopieur (1) et un support de mémorisation externe (71a),
dans lequel l'identifiant de destination correct de la machine externe voulue est détecté sur la base de la coïncidence entre un troisième identifiant de destination entré dans le télécopieur par l'intermédiaire de l'unité d'entrée (4) et des identifiants de destination associés aux données utilisables par un télécopieur qui sont mémorisées dans le support de mémorisation externe (71a) ; et
dans lequel les données utilisables par un télécopieur mémorisées dans le support de mémorisation externe (71a) et associées à l'identifiant de destination correct sont transmises à la machine externe voulue identifiée par l'identifiant de destination correct lorsque l'identifiant de destination correct de la machine externe voulue est détecté.
